# EUROPEAN PATENT SPECIFICATION

(11) **EP 3 387 336 B1**
(45) Date of publication and mention of the grant of the patent: **14.08.2019**
(21) Application number: 16815566.1
(22) Date of filing: 06.12.2016
(51) Int. Cl.: F24S 30/40, F24S 10/00, H02S 20/30

(54) **COVERING FOR WALLS OF BUILDINGS**
ABDECKUNG FÜR GEBÄUDEWÄNDE
COUVERTURE POUR PAROIS DE BÂTIMENTS

(30) Priority: 09.12.2015 IT UB20156810
(43) Date of publication of application: 17.10.2018
(73) Proprietor: Beretta, Angelo, 20063 Cernusco sul Naviglio (MI) (IT)
(72) Inventor: Beretta, Angelo, 20063 Cernusco sul Naviglio (MI) (IT)
(74) Representative: Martegani, Franco
(86) International application number: PCT/EP2016/079917
(87) International publication number: WO 2017/097772

(56) References cited:
- EP-A1- 0 593 201
- EP-A1- 1 920 120
- WO-A1-01/88312
- DE-A1- 2 953 533
- DE-A1-102008 004 334
- DE-U1-202010 000 520

## Description

The present invention relates to a multifunctional covering shield for walls of buildings.

Currently in the field of coverings for buildings in general, complex systems are being asserted that are attempting to exert, in addition to an actual covering function, also other numerous functions. These covering solutions, in fact, on the one hand contribute to forming and/or completing the exterior wall or façade of the building and, on the other, try to collaborate with existing parts of the façade to provide multiple functions and additional services.

"Brise soleil" (sun shields) made of metal, wood, resin, etc., are present on the market, for example.

"Brise soleil" (sun shields) are also present, produced with the addition of photovoltaic modules having extremely small dimensions wherein the modules, however, are fixed with respect to the wall of the building.

These services can, for example, be for shading, thermal optimization, production of electric energy, etc.

Some known systems for producing these coverings, i.e. those that can be classified as being the simplest, are located in some parts of the façade, for example in correspondence with windows, window frames and various kinds of openings.

Other more complex systems extend to the whole façade of the building on which they are to be positioned and comprise a supporting structure constrained to the outer wall of the building in various ways.

In this respect, as already mentioned, there are fixed systems which, in a certain sense, in some cases double the façade as they are positioned at a certain distance, fixed to a structure rigidly constrained to the façade itself of the building.

Other systems, on the other hand, that can be defined as being movable, provide movable parts with respect to a supporting structure, generally consisting of movable oscillating panels. These panels, as known, oscillate around their intermediate central area, as disclosed for example in patent application EP 2626649.

In this case, complex positioning systems of the panels must be provided for the inclination and desired position in relation to the hour of the day and geographical position of the building on which they are positioned.

The systems are produced with levers positioned at the rear of the panels for moving the same. The panels oscillate around their intermediate area analogously to the movement of the slats that form so-called Venetian blinds.

This arrangement entails that this shielding of the building be positioned at a certain distance from the wall itself of the building. This enables a movement of the single panels oscillating around their intermediate area in addition to defining a ventilation channel of the façade, if envisaged.

It can be immediately observed that the ventilation of the façade seems to be disturbed by the presence of half of the panel which is positioned behind the supporting structure of the same panel, interfering with the air flow of the ventilation channel thus defined, occupying a large part of the same.

The panels are therefore arranged on a cantilevered structure well away from the wall of the building creating considerable stress in the case of wind.

The encumbrance thus generated in the front of the building consequently does not have a particularly pleasant aesthetical appearance, especially when the panels are rotated and tilted revealing said structure which in some ways is foreign to the building.

EP 1920120 relates to a shielding system of a façade according to the preamble of claim 1.

EP 593201 relates to shielding equipment for façades having panels spaced from each other, of the same dimension and hinged in their central part.

A general objective of the present invention is to solve the drawbacks of the known art indicated above, in an extremely simple, economical and particularly functional manner.

A further objective of the present invention is to provide a shielding that allows a protection for the wall itself, and also non-cumbersome elements that are in any case able to provide additional services of the type indicated above.

Another objective of the present invention is to provide a shielding that can be applied and used on traditional façades in existing masonry with the presence of window frames and also on continuous glass façades for both new constructions and also for the redevelopment of existing buildings.

In view of the above objectives, according to the present invention, a multifunctional covering shield for walls of buildings has been conceived, having the characteristics specified in the following claims.

The structural and functional characteristics of the present invention and its advantages with respect to the known art will appear even more evident from the
following description referring to the enclosed drawings, which, *inter alia,* show an embodiment of a multifunctional covering shield for walls of buildings produced according to the same invention.

In the drawings:
- figures 1 and 2 are a schematic raised sectional side view and a schematic front view of a multifunctional covering shield for walls of buildings not according to the present invention positioned on a wall of a building, partially open;
- figures 3 and 4 are raised sectional side views of a section of shielding in a further schematic embodiment wherein the shielding has two different operating positions, one closed and adjacent to the wall of the building, and the other open and prepared for receiving sunrays, bearing panels or photovoltaic modules;
- figure 5 is a plan view from above of a section of shielding, partially shown and split, of the embodiment of figure 4;
- figure 6 is a schematic perspective view of a multifunctional covering shield for walls of buildings according to the present invention in a further embodiment positioned on a wall of a building;
- figure 7 is a sectional view of a section of shielding not according to the invention in its alternative arrangement of figure 6 in an open position.

With reference in general to the figures, these illustrate schematic views of a multifunctional covering shield for walls of buildings according to the present invention.

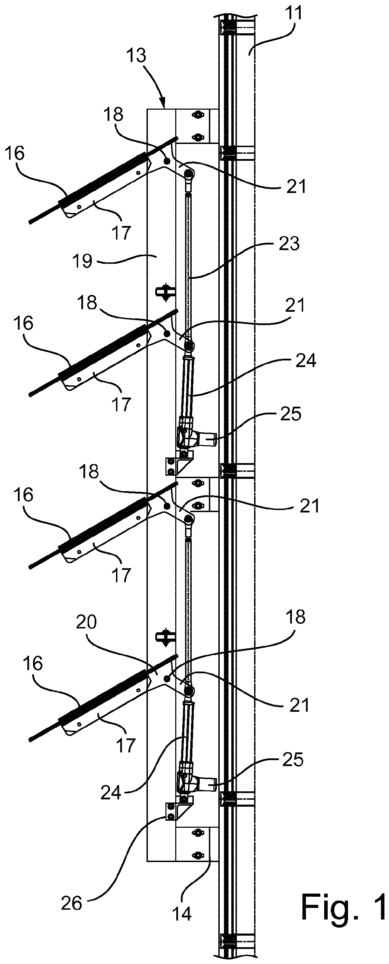

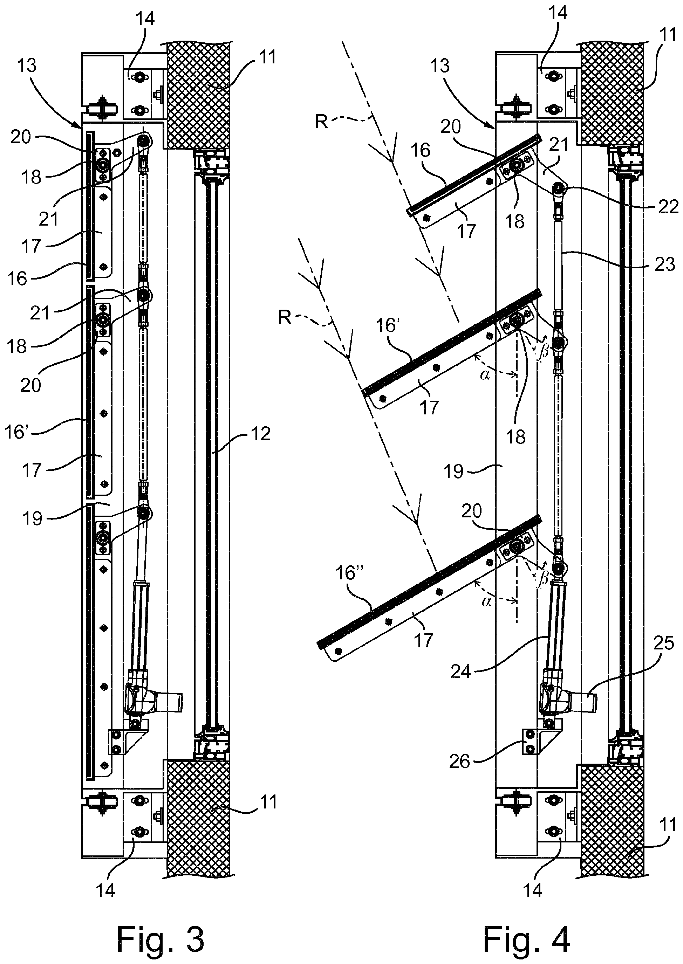

More specifically, figures 1 to 5 show embodiments of the shielding (figures 3-5 according to the present invention) when applied to at least a portion of a wall, partially shown in 11, of a building equipped for example with window frames, one of which is shown in 12.

A supporting structure 13 of the shield is made integral with the wall 11 by means of supports 14 constrained to the same wall 11 by means of fixing elements 15, such as bolts.

In the example, a series of glass panels 16, 16', 16", etc. bearing and/or incorporating photovoltaic elements 116, is rectangular-shaped and is carried by supporting frames 17. Said supporting frames 17 have, on opposite sides close to their rear ends facing the façade, pins 18 that are rotatingly inserted in uprights 19 of the supporting structure 13. The panel can also be produced in a single piece with its support defined in the same and is provided in at least a single element positioned in correspondence with at least a portion of a wall 11 of a façade.

Furthermore, the supporting frames 17 or panels 16, 16', 16" extend in at least one side at one of their ends, or are made integral with a plate-shaped end portion 20 of a bellcrank lever 21. Each bellcrank lever 21 extends at the other free end opposite the plate-shaped end portion 20 into a tilted end portion according to a certain prefixed angle β in addition to 90°.

Each tilted end portion of the bellcrank lever 21 is articulately constrained in 22 to a section or/and an end of an actuation and control rod 23, in the example having a vertical trend and movement.

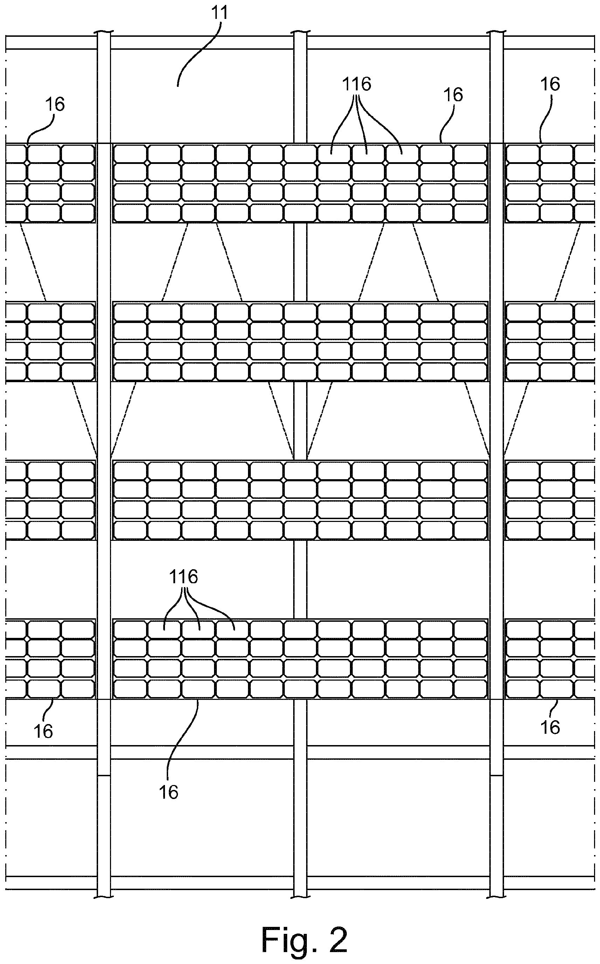

This arrangement, which controls the rotation or oscillation of the panel(s) is provided for each supporting frame 17 carrying the respective panels 16 as in figures 1 and 2 or the respective panel 16, 16', 16", etc. as in figures 3 and 4.

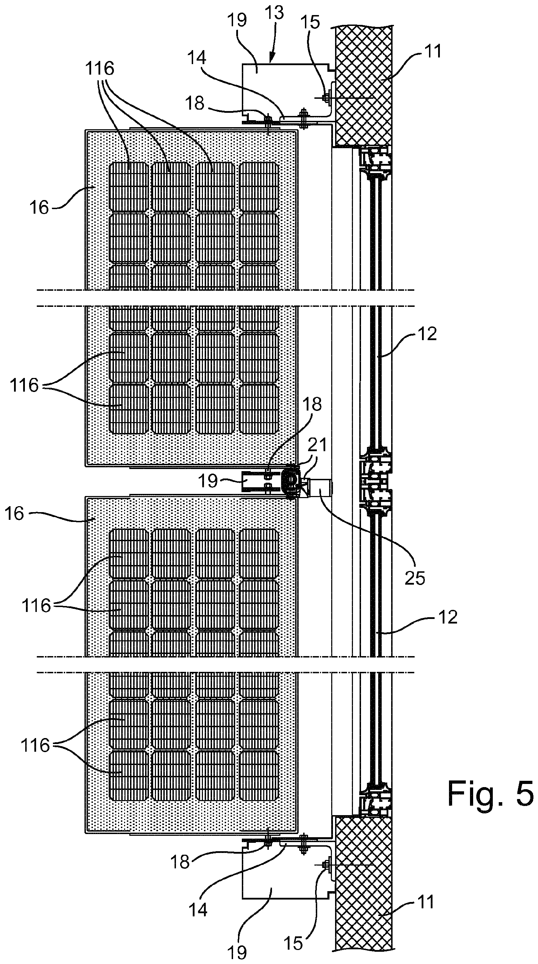

Figure 5 shows an example of how adjacent panels 16 are connected to a single central control by means of respective adjacent and facing bellcrank levers 21.

The actuation and control rod 23 is connected in its lower part to an actuator, such as a cylinder 24, for example motorized in 25 and positioned on an underlying support 26. Said actuator 24, through the actuation rod 23, is thus able to control the forward and backward, opening and closing, rotation movement, of the panels 16, 16', 16", etc. of the shield of the invention, for example in pairs adjacent to each other.

In this way, as is evident from the sections of figures 3 and 4, it is possible to pass from a closed position of the shield of figure 3 to a more or less open position of the shield of figure 4 or figure 1. In this second position, the panels 16, 16', 16", etc. are rotated by a certain angle α with respect to the vertical plane in which they were all aligned, creating a closed position.

In this example of figures 3 and 4, it can also be seen how sunrays R strike the single panels 16, 16', 16", etc. from which they are collected for capturing solar energy.

In figures 1 and 2, the panels 16 are all of the same size for covering the whole façade of the building without any other specific expedient. In the embodiment of figures 3 and 4, on the contrary, it can be observed how the panels 16, 16', 16", etc. have a differing dimension increasing from the top downwards in order to improve and obtain the greatest possible collection of rays. In this way, the uppermost panel 16 has a smaller dimension with respect to the subsequent panel 16', whereas the lowermost panel 16" has a larger dimension.

This arrangement of panels 16, 16', 16", etc. having a differing dimension increasing from the top downwards can also contribute to optimizing the passage of light towards the window frame or towards the internal environments of the building.

It can thus be seen how the panels or shield of the present invention also optimally exerts the required function of "brise soleil" (sun shield).

Figures 1 and 2 show how a differentiated actuation for two groups of upper panels 16 and two groups of lower panels 16, can be provided, all shown open in Figure 1, but that can alternatively be an upper open group and the other lower group closed, for having differentiated shading or a reception of solar energy localized in only one group.

The example shown in Figures 3 and 4 illustrate a shield according to the invention suitable for being positioned in correspondence with a window frame 12 having a certain dimension that can also be in a localized area of the façade. This dimension entails the provision of pairs of panels 16, 16', 16", etc. adjacent to each other forming two vertical rows (Figure 5). There can naturally also be the analogous provision of a single panel 16, 16', 16", etc. controlled by the respective actuation and control rod 23 connected to the actuator 24 or in any case of a whole series of panels covering the entire façade or most of it as shown in Figure 2.

This same movement also imparts a considerable versatility of use of the shield. With this movement system, in fact, the possibility is generated of using it with home automation systems, rain, wind, smoke sensors (fire prevention) and sensors for optimizing the exposure of the modules or photovoltaic panels in relation to the position of the sun during the day (solar tracker).

A movable photovoltaic shielding is therefore created having purposes of both shading and producing electric energy.

This provision, moreover, is not limited to achieving the two main functions listed above.

With this solution, in fact, an architectural and energy upgrading of existing buildings in the commercial and service industrial sector can also be obtained.

This shielding according to the invention, in fact, allows from an architectural point of view:
- the building to be redeveloped by changing its aesthetical and architectural values;
- a movable façade to be created which, when exerting its functions, changes form during the day, thus becoming alive, dynamic and functional;
- the use of panels with customizable geometries, forms and colours, thus becoming detached from the standard format of photovoltaic modules in use;
- the use of photovoltaic modules made to measure and customized, thus enabling the positioning of the photovoltaic cells and also the shading percentage to be selected and varied;
- the creation of light effects on request with particular night backlighting.

In addition, the shield of the invention allows optimum integration in newly constructed buildings with a low environmental impact and high energy performances.

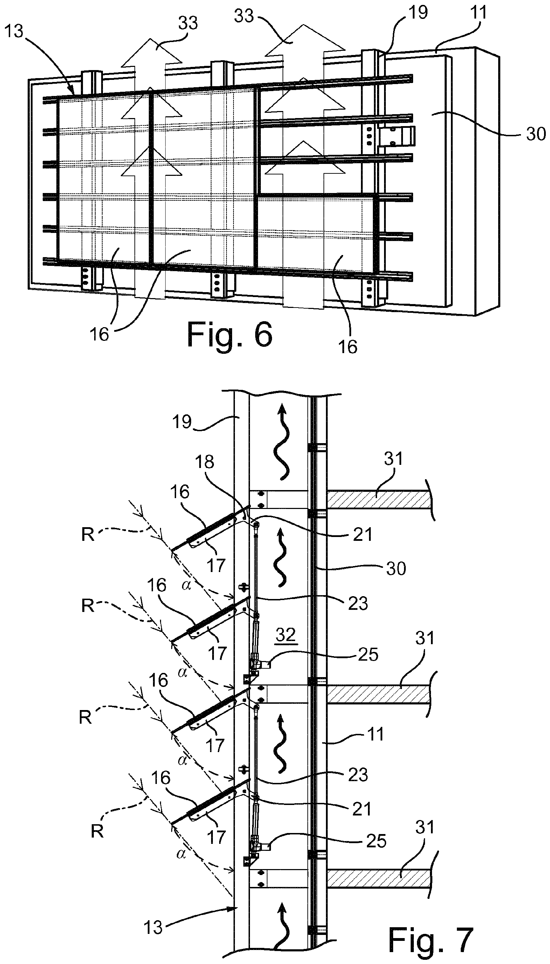

With respect to what is shown in Figures 6 and 7, these illustrate a further embodiment of a multifunctional covering shield for walls of buildings according to the invention and not according to the invention, respectively.

In this further embodiment shown, the same elements are indicated with the same reference numbers as the previous embodiment.

The building concerned therefore provides a vertical wall 11 with a continuous glass façade 30.

The supporting structure 13 of the shield according to the invention is connected in correspondence with the string courses or floor slabs 31 of the building.

This embodiment provides that said supporting structure 13 as also its vertical uprights 19 are positioned at a certain distance from the vertical wall 11 or continuous glass façade 30 in order to define an ample ventilation channel 32 of the façade 30.

The positioning of the numerous panels 16, controlled by respective actuation and control rods 23 connected to a respective actuator 24, is thus spaced from the same continuous glass façade 30.

It can also be observed how, according to the present invention, said ventilation channel 32 is advantageously completely free of any obstacle, as all the panels 16, 16', 16" are outside the ventilation channel 32 in both a vertical closed position and in an open rotated position.

As can be seen in figure 7, in fact, even when the shield is open with the various panels 16 raised, the panels 16 or their supporting frames 17 do not interfere with the space occupied by the ventilation channel 32.

This allows an optimized and improved ventilation, indicated with the arrows 33, with respect to the known solutions of façades with panels oscillating centrally.

As a result of the new and original positioning of the rotation axis of the support of the panels, the shield according to the invention reduces the encumbrance between the main façade and the panels 16 or shielding photovoltaic glass elements. The supporting frame 17 is in fact hinged in 18 at one of its ends with respect to the uprights 19 and this position of the pins 18 ensures that with the panels 16, 16', 16", etc. closed, a complete shielding of the façade 30 is created.

It should also be pointed out that this positioning, with respect to the fixed known solutions also offer easier maintenance and washing, in particular in the presence of glass façades.

The presence of a movement obtained by different types of motors (electric, oleodynamic and pneumatic) and powers according to specific demands, also allows the prevision of panels having considerable dimensions or of a variable size with respect to each other.

In the example shown in Figures 6 and 7, for example, the panels 16 all have the same dimension, but they can alternatively have variable dimensions in relation to further specific requirements such as those shown in Figures 3 and 4.

In a shield according to the invention, moreover, it should be noted that motors and electrical wiring, and other auxiliaries for the actuators, can be easily camouflaged and are easily accessible for maintenance.

This is also due to the fact that the ventilation channel 32 or the space between the façade and the panels is not affected by any element forming the shield of the invention.

Furthermore, the facility of providing a shield according to the invention also for the redevelopment of existing buildings, should also be emphasized.

The objectives mentioned in the preamble of the description have thus been achieved.

The forms of the structure for providing a shield of the invention, as also the materials and assembly modes, can naturally differ from those shown for purely illustrative and non-limiting purposes in the drawings.

The protection scope of the invention is therefore delimited by the enclosed claims.

## Claims

1. A multifunctional covering shield for walls of buildings, said shield comprising at least one pair of panels (16, 16', 16") containing and/or incorporating photovoltaic elements (116), a supporting structure (13), pins (18) and at least one actuating element (24, 25), wherein said at least one pair of panels (16, 16', 16") is arrangeable in correspondence with at least one portion of a wall (11) of a façade, wherein said panels can be rotated with respect to said supporting structure (13) by means of pins (18) provided in correspondence with ends of said panels (16, 16', 16"), wherein said supporting structure (13) is positionable in correspondence with said at least one portion of a wall (11), and said at least one actuating element (24, 25) is provided for controlling the rotation of said panels around said pins (18), **characterized in that** said at least one pair of panels (16, 16', 16") is made of glass and each panel of said at least one pair of panels (16, 16', 16") has a differing dimension increasing from the top of the shield downwards to the bottom of the shield, so that the uppermost panel has a smaller dimension with respect to the subsequent panel, whereas the lowermost panel has a larger dimension.

2. The shield according to claim 1, **characterized in that** said at least one pair of panels (16, 16',16") is connected to said at least one actuating element (24,25) by means of an actuating and control rod (23) which extends vertically.

3. The shield according to claim 1 or 2, **characterized in that** said at least one pair of panels (16, 16',16") extends into at least one side, where said pins (18) are provided, in a bellcrank lever (21).

4. The shield according to claim 3, **characterized in that** said bellcrank lever (21) extends at a free end into a tilted terminal portion according to a certain prefixed angle (β).

5. The shield according to claim 4, **characterized in that** said terminal portion tilted according to a certain prefixed angle (β), is connected to said actuating and control rod (23) articulately (22) to a section and/or to an end of said actuating and control rod (23).

6. The shield according to one or more of the previous claims, **characterized in that** each supporting frame (17) of each of said panels (16, 16', 16") is hinged (18) at one of its ends with respect to uprights (19) of said supporting structure (13).

## Patentansprüche

1. Multifunktionale Abschirmung für Wände von Gebäuden, wobei die Abschirmung Folgendes umfasst: mindestens ein Paar Paneele (16, 16', 16"), die Photovoltaik-Elemente (116) umfassen und/oder integrieren, eine Stützstruktur (13), Stifte (18), und mindestens ein Betätigungselement (24, 25), wobei das mindestens eine Paar Paneele (16, 16', 16") entsprechend mindestens einem Abschnitt einer Wand (11) einer Fassade angeordnet werden kann, wobei die Paneele mit Bezug auf die Stützstruktur (13) mittels Stiften (18) gedreht werden können, die entsprechend Enden der Paneele (16, 16', 16") angeordnet sind, wobei die Stützstruktur (13) entsprechend dem mindestens einen Abschnitt einer Wand (11) positioniert werden kann, und das mindestens eine Betätigungselement (24, 25) der Steuerung der Drehung der Paneele um die Stifte (18) dient,
**dadurch gekennzeichnet, dass** das mindestens eine Paar Paneele (16, 16', 16") aus Glas besteht und dass jedes Paneel des mindestens einen Paares von Paneelen (16, 16', 16") eine unterschiedliche Abmessung aufweist, die vom oberen Ende der Abschirmung nach unten zum unteren Ende der Abschirmung zunimmt, so dass das oberste Paneel eine kleinere Abmessung mit Bezug auf das nachfolgende Paneel aufweist, wohingegen das unterste Paneel eine größere Abmessung aufweist.

2. Abschirmung nach Anspruch 1, **dadurch gekennzeichnet, dass** das mindestens eine Paar Paneele (16, 16', 16") mit dem mindestens einen Betätigungselement (24, 25) mittels einer Betätigungs- und Steuerstange (23) verbunden ist, die sich vertikal erstreckt.

3. Abschirmung nach Anspruch 1 oder 2, **dadurch gekennzeichnet, dass** sich das mindestens eine Paar Paneele (16, 16', 16") in mindestens eine Seite, wo die Stifte (18) angeordnet sind, in einen Winkelhebel (21) hinein erstreckt.

4. Abschirmung nach Anspruch 3, **dadurch gekennzeichnet, dass** sich der Winkelhebel (21) an einem freien Ende in einen geneigten Abschlussabschnitt gemäß einem bestimmten zuvor festgelegten Winkel (β) erstreckt.

5. Abschirmung nach Anspruch 4, **dadurch gekennzeichnet, dass** der gemäß einem bestimmten zuvor festgelegten Winkel (β) geneigte Abschlussabschnitt an einer Sektion und/oder an einem Ende der Betätigungs- und Steuerstange (23) angelenkt (22) und so mit der Betätigungs- und Steuerstange (23) verbunden ist.

6. Abschirmung nach einem oder mehreren der vorangehenden Ansprüche, **dadurch gekennzeichnet, dass** jeder Stützrahmen (17) von jedem der Paneele (16, 16', 16") an einem seiner Enden mit Bezug auf aufrechte Elemente (19) der Stützstruktur (13) angelenkt ist (18).

## Revendications

1. Écran de couverture multifonctionnel pour parois de bâtiments, ledit écran comprenant au moins une paire de panneaux (16, 16', 16") contenant et/ou incorporant des éléments photovoltaïques (116), une structure de support (13), des broches (18) et au moins un élément d'actionnement (24, 25), ladite au moins une paire de panneaux (16, 16', 16") pouvant être disposée en correspondance avec au moins une partie d'une paroi (11) d'une façade, lesdits panneaux pouvant être tournés par rapport à ladite structure de support (13) au moyen de broches (18) disposées en correspondance avec des extrémités desdits panneaux (16, 16', 16"), ladite structure de support (13) pouvant être positionnée en correspondance avec ladite au moins une partie d'une paroi (11), et ledit au moins un élément d'actionnement (24, 25) étant destiné à commander la rotation desdits panneaux autour desdites broches (18), **caractérisé par le fait que** ladite au moins une paire de panneaux (16, 16', 16") est constituée de verre et chaque panneau de ladite au moins une paire de panneaux (16, 16', 16") a une dimension différente augmentant du sommet de l'écran en descendant vers le bas de l'écran, de telle sorte que le panneau le plus haut a une dimension plus petite par rapport au panneau suivant, tandis que le panneau le plus bas a une dimension plus grande.

2. Écran selon la revendication 1, **caractérisé par le fait que** ladite au moins une paire de panneaux (16, 16', 16") est reliée audit au moins un élément d'actionnement (24, 25) au moyen d'une tige d'actionnement et de commande (23) qui s'étend verticalement.

3. Écran selon la revendication 1 ou 2, **caractérisé par le fait que** ladite au moins une paire de panneaux (16, 16', 16") s'étend sur au moins un côté, où se trouvent lesdites broches (18), dans un renvoi d'angle (21) .

4. Écran selon la revendication 3, **caractérisé par le fait que** ledit renvoi d'angle (21) s'étend à une extrémité libre dans une partie terminale inclinée selon un certain angle prédéfini (β).

5. Écran selon la revendication 4, **caractérisé par le fait que** ladite partie terminale inclinée selon un certain angle prédéfini (β) est reliée à ladite tige d'actionnement et de commande (23) de manière articulée (22) à une section et/ou une extrémité de ladite tige d'actionnement et de commande (23).

6. Écran selon une ou plusieurs des revendications précédentes, **caractérisé par le fait que** chaque cadre de support (17) de chacun desdits panneaux (16, 16', 16") est articulé (18) à l'une de ses extrémités par rapport à des montants (19) de ladite structure de support (13).
